# EUROPEAN PATENT APPLICATION

(11) **EP 4 811 245 A1**
(43) Date of publication of application: **23.09.2026**
(21) Application number: 26315143.3
(22) Date of filing: 17.03.2026
(51) Int. Cl.: G06Q 10/0833, G06Q 10/0836

(54) **PARCEL LOCKER PICKUP WITH ID VALIDATION**

(30) Priority: 17.03.2025 US 202563773386 P; 05.02.2026 US 202619531045
(71) Applicant: Quadient Technologies France, 92220 Bagneux (FR)
(72) Inventor: LANZI, Daniel, 92220 Bagneux (FR)
(74) Representative: Cabinet Beau de Loménie

(57) **Abstract**

Methods and systems are provided for determining and confirming the identity of a purported recipient of a parcel delivered to a parcel locker. The parcel locker compares identity information on the purported recipient's ID to identity information obtained from a carrier, such as via an external API. If the identity information does not exactly match, the parcel locker confirms identity using text comparison techniques to make sure that the purported recipient is the intended recipient of the parcel delivered to the parcel locker.

## Description

### BACKGROUND

Parcel locker systems are increasingly used for delivery of parcels. A parcel locker system typically includes multiple parcel lockers, each of which has multiple compartments that can store parcels for retrieval by a recipient, after delivery to the parcel locker. Parcel lockers may be managed by a remote locker management system. The locker management system may, for example, receive delivery notifications from carriers such as UPS, FedEx, USPS, and the like, send delivery notifications to recipients, and the like. Each parcel locker typically includes local software that coordinates with the locker management system, for example to track available compartments, confirm delivery of a parcel to a carrier, and the like.

### BRIEF DESCRITION OF THE DRAWINGS

FIG. 1 shows an example parcel locker system according to embodiments disclosed herein.
FIG. 2 shows an example process for parcel pickup from a parcel locker using ID validation according to embodiments disclosed herein.

### DETAILED DESCRIPTION

In a conventional parcel locker system, a sender ships a parcel via a carrier, such as USPS, UPS, FedEx, and the like, to a recipient, typically an individual. The carrier delivers the parcel to a parcel locker in the parcel locker system, where it is held in a locker compartment until retrieved by the recipient. The carrier provides information about the parcel to the parcel locker system, such as a tracking number and an intended recipient. The parcel locker system notifies the recipient that the parcel is available for retrieval ("pick up"), typically via email, text message / SMS, or the like. The notification typically includes the tracking number or other dedicated retrieval code that the recipient provides to the parcel locker storing the parcel. Upon confirming the tracking number or other retrieval code, the parcel locker opens the compartment so that the recipient can retrieve the parcel.

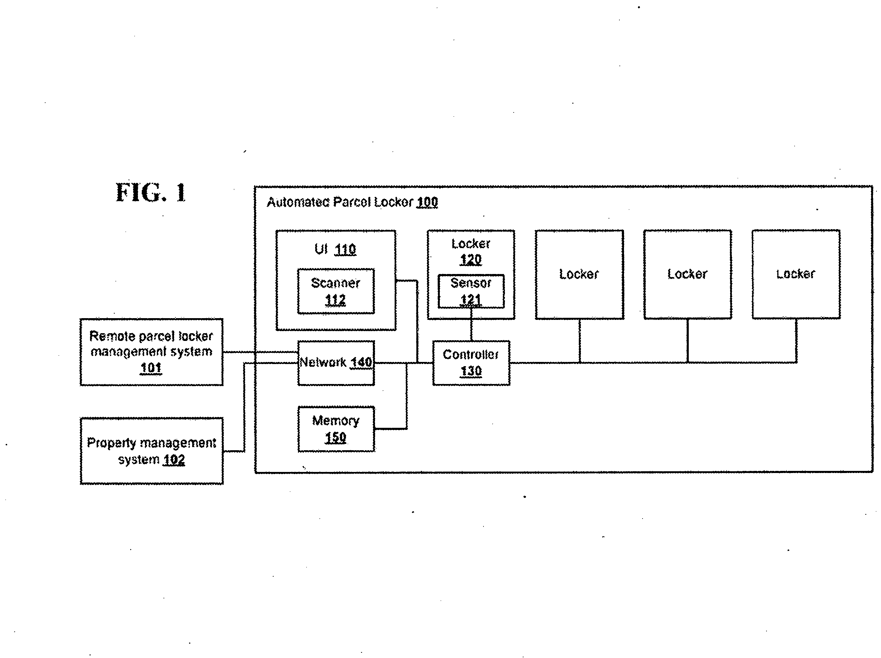

FIG. 1 shows a schematic illustration of an automated parcel locker system as disclosed herein. The parcel locker system 100 may include any number of individual locker compartments 120, each of which may be associated with one or more sensors 121. The sensors may include, for example, a pressure, weight, optical, or similar sensor to detect whether an item is present in the locker, a door open/close sensor to indicate the status of a door as open or closed, and/or an open/close sensor that indicates when a door changes state, e.g. from open to closed or vice-versa, or any combination thereof. For example, one or more sensors may be used to determine whether an item is present in the locker, which information may be provided via an electronic signal to the controller 130 and used in the processes disclosed herein wherever a parcel is delivered to the locker 100. Similarly, any suitable type of door sensor may be used to determine the status or activity of the locker door, which information may be provided via electronic signal to the controller 130 and used in the processes disclosed herein.

A user interface 110 may include a display screen and one or more interface components such as a keyboard, touch screen, visual indicators, or the like. A controller 130 may include one or more processors and software to allow for control and management of the lockers 120, sensors 121, and user interface 110. A local memory 150 also may be used to store information such as parcel information, user interface data, and the like, as disclosed herein. Any such data may be obtained from a remote locker management system 101 connected to the automated parcel locker system 100 via the network interface 140. The components may be communicatively coupled such as via a communications bus, local wireless or wired network, or the like.

During operation of the processes disclosed herein, generally the controller 130 may direct operation of the lockers 120 and their associated doors, sensors 121, and the like. The controller 130 also may generate and provide user interface prompts and other components to the interface 110, receive input from the users via the same, and operate the parcel locker system 100 according to the same. The parcel locker 100 also may be in communication with other components, such as a property management system 102 that otherwise manages residences or businesses served by the parcel locker system 100, such as via wired or wireless network connections 140.

The user interface 110 also may include a scanner 112 capable of sensing and reading a machine-readable code such as a QR code, a bar code, or the like, as disclosed in further detail herein. The scanner 112 may be communicatively coupled to other components of the system 100, including the user interface 110, for example, to allow the system to confirm data encoded in the machine-readable code to a courier, provide prompts generate by the controller 130 based on such information, request correction or confirmation of such information from the courier, or the like.

Notably, a conventional parcel locker system requires some form of contact information, typically electronic contact information, to notify the recipient of the availability of the parcel and provide the retrieval code. This may be stored by the parcel locker system itself, such as where the parcel locker system coordinates with a property management system to provide parcel retrieval services for an apartment, dormitory, gated community, or the like. Alternatively or additionally, the carrier may obtain and provide recipient contact information, which is then provided to the parcel locker system. The contact information may

The conventional arrangement for notifying recipients of parcels to be retrieved from parcel lockers has evolved due to the relative ubiquity of email, text message, and other electronic communication forms. Modern parcel lockers are highly computerized and automated, and typically are fully integrated with such electronic communication channels. As a result, conventional modern parcel lockers and parcel locker systems are poorly equipped to address situations in which both the carrier and the parcel locker management system do not have any electronic contact information for the recipient. Embodiments disclosed herein address this shortcoming by providing alternate processes and systems for determining whether a person accessing the parcel locker is a proper recipient for a given parcel.

There are three general situations for delivery of a parcel to a recipient. First, the recipient may receive a pickup code from the locker system. As previously noted, this requires the locker system to have contact information for the recipient. In this case, the recipient provides the pickup code to the locker to which the parcel was delivered. The locker validates the code and, presuming it is correct and valid, provides access to the parcel such as by opening the door of the compartment in which the parcel is stored.

Second, a recipient may receive a tracking number for the parcel. For example, the sender may provide the tracking number directly to the recipient. As used herein, a "tracking number" refers to a unique identifier used by a carrier to track movement of a parcel through the delivery stream for the carrier and/or local delivery services such as the USPS, where such services are integrated with or connected to the carrier's tracking system. The tracking number typically is displayed on the outside of the parcel, though it may be encoded in a machine-readable (and often non-human-readable) format such as a bar code, QR code, or the like. The recipient may receive a human-readable version of the tracking code or a copy of the machine-readable format. Upon providing the tracking number to the locker to which the parcel was delivered, the locker verifies the tracking number and provides the parcel to the recipient.

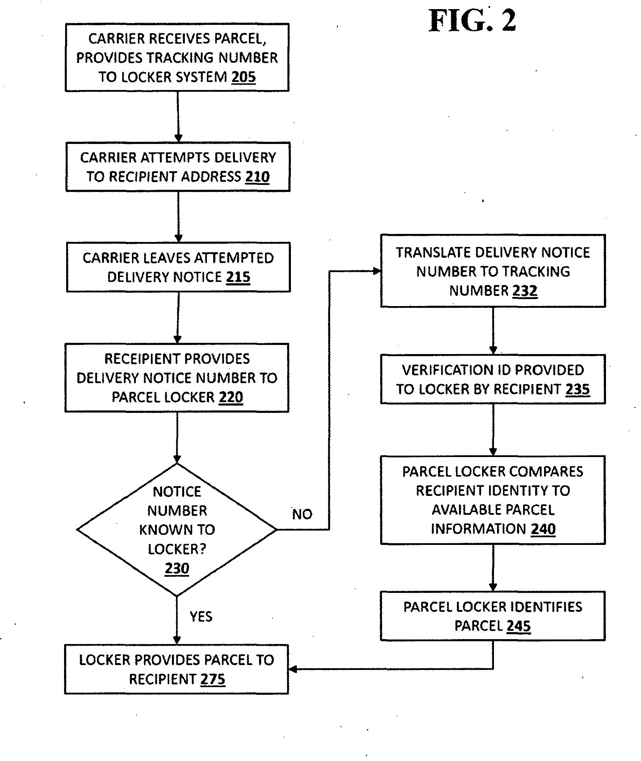

In some cases, however, it may be impractical, impossible, or undesirable for the user to enter the entire tracking number in the user interface of the parcel locker to which the parcel was delivered. For example, the tracking number may be long enough that it is impractical to expect every recipient to enter it via the user interface, which may be a limited interface such as a mobile app, keypad, or the like. As another example, a carrier may change a tracking number format, or it may be possible to identify a parcel uniquely using a subset of the full tracking number. In this case, the locker may accept a subset of the tracking number and verify the purported recipient's identity through a secondary means such as a government-issued ID or the like. The parcel locker may verify the recipient's identity based on identifying information encoded on the ID, such as by using matching techniques described herein with respect to FIG. 2. Upon verifying the recipient's identity, the locker provides the recipient with access to the parcel. Similarly, a recipient may receive a delivery notice number as disclosed below, without any portion of the full tracking number. In any of these cases, a purported recipient (i.e., someone claiming to be a recipient of a parcel delivered to a parcel locker) may confirm their identity the parcel locker as disclosed herein and thus receive delivery of the parcel.

FIG. 2 shows a process for delivering a parcel to a recipient using alternate ID verification techniques as disclosed herein. At 205, a carrier receives a parcel for delivery to a recipient, through any suitable mechanism including conventional techniques for shipping via a carrier. The carrier assigns a tracking number to the parcel, which it may provide to the parcel locker system at any point. For.example, a carrier may routinely provide a parcel locker system with tracking numbers that are expected to be delivered to lockers in the system. In other cases, the carrier may provide the tracking number when it determines that the parcel will be delivered to a parcel locker instead of the recipient's home or business address (e.g., at step 215 below) or upon request from the parcel locker (e.g., at step 240 below).

At 210, the carrier may attempt to deliver the parcel to the recipient's address but be unable or unwilling to do so. For example, the recipient may not be available at the delivery address (whether residential or business) and the sender's instructions may not allow for the parcel to be left unattended. As another example, the parcel may require delivery to an adult willing to provide a signature or to an accepted parcel locker. Instead of leaving the parcel, the carrier may leave an "attempted delivery notice" at 215. Such a notice often takes the form of a "door tag" or other physical notice left at the recipient's address indicating that a delivery was attempted. The notice also may provide instructions on how the recipient may retrieve the parcel from a parcel locker, including the location(s) of suitable lockers, retrieval instructions, and the like. The notice typically will include a "delivery notice number" or other unique identifier for the attempted delivery. The delivery notice number often will be different than the tracking number for the parcel, which may be due to privacy concerns (since the attempted delivery notice may be publicly visible) or technical constraints, such as where attempted delivery notices are prepared in advance and it is not possible for carriers to predict which parcels will be deliverable or not.

At 220, the recipient may then go to the parcel locker and provide the delivery notice number using any suitable interface. For example, the delivery notice number may be a human-readable code that the user enters via a keyboard, touch screen, or the like; or it may be a bar code, QR code, or the like that the parcel locker may read from the attempted delivery notice directly using a scanner.

At 230, the locker may consult one or more lookup tables, databases, APIs, or other sources of information to determine whether the delivery notice number is "known" to the locker system, i.e., whether it is sufficient for the locker to identify the appropriate parcel to provide to the recipient based on the delivery notice number. For example, in some embodiments the delivery notice number may include a portion of a tracking number previously provided to the parcel locker system by the carrier, in which case the parcel locker may be able to identify the tracking number, and thus the parcel, based on the delivery notice number and the stored relationship. The parcel locker then may provide the parcel to the recipient at 275.

More commonly, however, the link between the delivery notice number and the tracking number is not directly available to the parcel locker system and it must be obtained from the carrier. The parcel locker may use any suitable service or lookup mechanism to translate the delivery notice number to a tracking number at 232. For example, the carrier may provide an API or similar interface for the parcel locker system to request information on parcels delivered to the locker system. In that case, at 232 the parcel locker may send a request to the carrier API or other suitable API with the delivery notice number and request an associated tracking number. Such requests typically are made via a remote management system 101 as shown in FIG. 1. As part of the process of requesting information about a parcel, the locker may confirm the identity of the recipient. This may be done to avoid potential privacy issues, such as inadvertent release of parcel information, and/or as a requirement for delivery by the carrier.

At 235, the parcel locker may request a verification ID from the recipient. For example, the parcel locker may require the recipient to present a valid government-issued ID that includes their full legal name and address, and/or other information. For example, the parcel locker may obtain a recipient address and last name from a driver's license.

At 240, the parcel locker attempts to identify one or more intended recipients for parcels stored at the parcel locker based on the recipient information and delivery notice number provided by the recipient: For example, the parcel locker may call a carrier API and provide the delivery notice number as previously disclosed. The carrier API may respond with intended recipient information, such as a full name and delivery address, that match a recipient linked to the delivery notice number by the carrier as previously disclosed. Alternatively, the API may provide only the tracking number corresponding to the delivery notice number. The locker may not need further recipient information at this point, for example because it was previously obtained based on information provided to the carrier at 205 or directly from the carrier during delivery.

In some cases, the recipient information on the recipient's ID may not exactly match the recipient information provided by the carrier. For example, the recipient address may use different abbreviations in street addresses, or the parcel may have been shipped using a shortened version of the recipient's name that is not shown on the ID (e.g., "Dave" vs. "David" and the like). The parcel locker may calculate an "edit distance" between the name and/or address provided by the ID and provided by the carrier. For example, the parcel locker may calculate the Levenshtein edit distance, Hamming distance, or the like between the two. Alternatively or additionally, the parcel locker may use other "fuzzy matching" techniques to determine whether the recipient information on the ID provided is "sufficiently close" to the information received from the carrier. Examples of such matching techniques are described in U.S. Patent No. 12,243,003, the disclosure of which is incorporated by reference in its entirety. Regardless of the techniques used, the parcel locker management system and/or the carrier may specify a threshold above which the recipient information is considered "close enough" to allow for delivery to the purported recipient and below which delivery is refused. For example, the threshold may be a numerical value for an edit distance calculation, a maximum number of differences or discrepancies, or the like.

If the recipient information on the ID matches the information obtained from the carrier, then the parcel locker provides the parcel to the recipient at 275. For example, the carrier API may return a tracking number associated with the parcel, which the parcel locker uses to identify a parcel stored at the parcel locker. Provision of the tracking number may be separate from the recipient information provided based on the delivery notice number. That is, the carrier may first provide recipient information such as name and address in response to an initial request in which the parcel locker provides the delivery notice number, and subsequently provide the tracking number once the parcel locker confirms a sufficient match between the provided recipient information and the information received from the carrier API.

If no match is found, the parcel locker may indicate that no parcel matching the provided information is found or return any other suitable error. The parcel locker also may enter an "assisted delivery" mode in which it requires a local administrator or other privileged user to assist the recipient in obtaining the parcel.

Embodiments disclosed herein prove improvements and extensions to computerized, automated parcel delivery and reception systems including automated parcel locker banks and open locker systems. Such systems rely on the computerized communication, processing, and storage systems to provide the efficiency and volume of parcel delivery required by modern shipping and receiving systems. As such, the processes and systems disclosed herein could not reasonably be performed by humans, or in the human mind, or the like, due to the necessity of interfacing with existing computerized shipping systems, mobile devices and applications, automated postal routing systems and requirements, and the like. For example, the processes described herein could not be performed without the specialized devices, computer processors, and software disclosed in relation to the same. Furthermore, automated locker bank systems as disclosed herein are designed to prevent access by arbitrary users to the information stored therein, including the occupancy status of each locker, the recipient information stored in local databases at the locker bank, and the like. Accordingly, automated techniques and systems as disclosed herein are necessary to effectuate delivery of parcels to the automated parcel locker as disclosed, since the associated systems do not provide human-readable information and/or human-accessible components, other than as disclosed herein.

More generally, various embodiments may include or be embodied in the form of computer-implemented processes and apparatuses for practicing those processes. Embodiments also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, such that when the computer program code is loaded into and executed by a computer, the computer becomes an apparatus for practicing embodiments of the disclosed subject matter. Embodiments also may be embodied in the form of computer program code, for example, whether stored in a storage medium, loaded into and/or executed by a computer, or transmitted over some transmission medium, such as over electrical wiring or cabling, through fiber optics, or via electromagnetic radiation, such that when the computer program code is loaded into and executed by a computer, the computer becomes an apparatus for practicing embodiments of the disclosed subject matter. When implemented on a general-purpose microprocessor, the computer program code segments configure the microprocessor to create specific logic circuits.

In some configurations, computer-readable instructions to implement techniques disclosed herein may be stored on a computer-readable storage medium and may be implemented by a general-purpose processor, execution of which may transform the general-purpose processor or a device containing the general-purpose processor into a special-purpose device configured to implement or carry out the instructions. Embodiments may be implemented using hardware that may include a processor, such as a general-purpose microprocessor and/or an Application Specific Integrated Circuit (ASIC) that embodies all or part of the techniques according to embodiments of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to embodiments of the disclosed subject matter.

The foregoing description, for purpose of explanation, has been described with reference to specific embodiments. However, the illustrative discussions above are not intended to be exhaustive or to limit embodiments of the disclosed subject matter to the precise forms disclosed. Many modifications and variations are possible in view of the above teachings. The embodiments were chosen and described to explain the principles of embodiments of the disclosed subject matter and their practical applications, to thereby enable others skilled in the art to utilize those embodiments as well as various embodiments with various modifications as may be suited to the particular use contemplated.

While the flow diagrams in the figures show a particular order of operations performed by certain implementations, such order is illustrative and not limiting. Other implementations and various embodiments may perform the operations in a different order, combine certain operations, perform certain operations in parallel, overlap performance of certain operations such that they are partially in parallel, and the like.

The above description includes several example implementations. However, it will be understood by one of skill in the art that the invention disclosed herein is not limited to the implementations described and can be practiced with modification and alteration within the spirit and scope of the appended claims. The description is thus illustrative instead of limiting.

## Claims

1. A method comprising:
receiving (215) a delivery notice number from a purported recipient of a parcel shipped via a carrier, wherein the delivery notice number is provided to the purported recipient on a delivery notice, and wherein the carrier assigns a tracking number to the parcel that is different than the delivery notice number;
requesting (232) recipient information from the carrier based upon the delivery notice number;
receiving the recipient information from the carrier;
requesting (235) identity information from the purported recipient;
obtaining the identity information from a government-issued identification provided by the purported recipient;
comparing (240) the recipient information received from the carrier to the identity information received from the purported recipient;
determining a text edit distance between the recipient information and the identity information;
responsive to the text edit distance being below a threshold, obtaining the tracking number from the carrier; and
based upon the tracking number, providing (275) the parcel to the purported recipient.

2. The method of claim 1, wherein requesting (232) recipient information from the carrier comprises accessing a carrier application programming interface (API) of the carrier.

3. The method of claim 1, wherein the delivery notice number comprises a QR code and receiving (215) the delivery notice number comprises scanning the QR code by a parcel locker.

4. The method of claim 1, wherein determining a text edit distance between the recipient information and the identity information comprises determining that the recipient information and the identity information are not an exact match.

5. The method of claim 4, wherein the text edit distance comprises a Levenshtein edit distance, a Hamming distance, or a combination thereof.

6. A parcel locker system (100) comprising one or more parcel lockers (120) arranged and configured to perform a method comprising:
receiving a delivery notice number from a purported recipient of a parcel shipped via a carrier, wherein the delivery notice number is provided to the purported recipient on a delivery notice, and wherein the carrier assigns a tracking number to the parcel that is different than the delivery notice number;
requesting recipient information from the carrier based upon the delivery notice number;
receiving the recipient information from the carrier;
requesting identity information from the purported recipient;
obtaining the identity information from a government-issued identification provided by the purported recipient;
comparing the recipient information received from the carrier to the identity information received from the purported recipient;
determining a text edit distance between the recipient information and the identity information;
responsive to the text edit distance being below a threshold, obtaining the tracking number from the carrier; and
based upon the tracking number, providing the parcel to the purported recipient.

7. The parcel locker system of claim 6, wherein requesting recipient information from the carrier comprises accessing a carrier application programming interface (API) of the carrier.

8. The parcel locker system of claim 6, wherein the delivery notice number comprises a QR code and receiving the delivery notice number comprises scanning the QR code by a parcel locker.

9. The parcel locker system of claim 6, wherein determining a text edit distance between the recipient information and the identity information comprises determining that the recipient information and the identity information are not an exact match.

10. The parcel locker system of claim 9, wherein the text edit distance comprises a Levenshtein edit distance, a Hamming distance, or a combination thereof.

11. A method comprising:
receiving (215) a delivery notice number from a purported recipient of a parcel shipped via a carrier, wherein the delivery notice number is provided to the purported recipient on a delivery notice, and wherein the carrier assigns a tracking number to the parcel that is different than the delivery notice number;
requesting (232) recipient information from the carrier via an external application programming interface (API) based upon the delivery notice number;
receiving the recipient information from the carrier;
obtaining identity information that identifies the purported recipient from a government-issued identification provided by the purported recipient;
subsequent to confirming that the recipient information received from the carrier matches the identity information received from the purported recipient, providing (275) the parcel to the purported recipient.

12. The method of claim 11, wherein the delivery notice number comprises a QR code and receiving the delivery notice number comprises scanning the QR code by a parcel locker.

13. The method of claim 11, further comprising, responsive to determining that the recipient information and the identity information do not include an exact match of text, determining a text edit distance between the recipient information and the identity information.

14. The method of claim 13, wherein the text edit distance comprises a Levenshtein edit distance, a Hamming distance, or a combination thereof.
